# EUROPEAN PATENT APPLICATION

(11) **EP 2 402 896 A1**
(43) Date of publication of application: **04.01.2012**
(21) Application number: 11153072.1
(22) Date of filing: 02.02.2011
(51) Int. Cl.: G06Q 10/00

(54) **Process management device, process management method, and computer program product**

(30) Priority: 30.06.2010 JP 2010150374
(71) Applicant: Kabushiki Kaisha Toshiba, Tokyo 105-8001 (JP)
(72) Inventor: Ozasa, Kenji, Tokyo 105-8001 (JP)
(74) Representative: Henkel, Breuer & Partner

(57) **Abstract**

According to one embodiment, a process management device includes a process storage module (413), a model case storage module (414), an identifying module (434), an extracting module (433), and an output module (431). The process storage module (413) stores processes included in a project, each associated with a plane date or yet-to-be-determined information indicating that the plane date is yet to be determined. The model case storage module (414) stores a difference between a due date of a predetermined process and that of another process included in the project based on a typical amount of process time. The identifying module (434) identifies a model due date for a process associated with the yet-to-be-determined information under an assumption that the process requires the typical amount of process time based on the process storage module (413) and the model case storage module (414). The extracting module (433) extracts the model due date from a predetermined number of days since a particular date. The output module (431) outputs information indicating that the plane date is yet to be determined for the process corresponding to the extracted model due date.

## Description

### FIELD

Embodiments described herein relate generally to a process management device, a process management method, and a computer program product.

### BACKGROUND

Various schedule management systems have been proposed to manage tasks of users. Many of these schedule management systems manage progress of a task of each user by setting a due date for each process in a project. A conventional technology has been proposed in which, when a due date arrives soon or when a due date has passed, an e-mail is sent to the user on the purpose of follow-up.

Various technologies have also been proposed to manage project due dates. For example, Japanese Patent Application Publication (KOKAI) No. 2003-187044 discloses a conventional technology for setting a due date for each of processes in a project by back-calculation from the final deadline of the project using a due date specified as the final deadline and a typical schedule of each of the processes in the project to calculate.

It is often impossible to set the due date for each of the processes upon creating a project because the amount of work of the processes varies depending on the project. In other words, sometimes it is inconvenient to set the typical schedule by back-calculation as disclosed in the conventional technology. In such a case, for example, "yet to be determined" is registered as the due date of a process. If the due date is set as "yet to be determined", a follow-up, such as transmitting a reminder e-mail, cannot be made based on the due date.

It is therefore an object of the invention to provide a process management device, a process management method, and a computer program product for managing each process of a project appropriately.

### SUMMARY

According to an embodiment, a process management device comprises a process storage module, a model case storage module, an identifying module, an extracting module, and an output module. The process storage module is configured to store processes included in a project, each associated with a plane date (scheduled due date) or yet-to-be-determined information indicating that the plane date is yet to be determined. The model case storage module is configured to store a difference between a due date of a predetermined process and a due date of another process included in the project based on a typical amount of process time. The identifying module is configured to identify a model due date for a process associated with the yet-to-be-determined information under an assumption that the process requires the typical amount of process time based on the process storage module and the model case storage module. The extracting module is configured to extract the model due date from a predetermined number of days since a particular date. The output module is configured to output information indicating that the plane date is yet to be determined for the process corresponding to the model due date extracted by the extracting module.

According to another embodiment, there is provided a process management method applied to a process management device comprising a process storage module configured to store processes included in a project each associated with a plane date or yet-to-be-determined information indicating that the plane date is yet to be determined, and a model case storage module configured to store a difference between a due date of a predetermined process and a due date of another process included in the project based on a typical amount of process time. The process management method comprises: identifying, by an identifying module, a model due date for a process associated with the yet-to-be-determined information under an assumption that the process requires the typical amount of process time based on the process storage module and the model case storage module; extracting, by an extracting module, the model due date from a predetermined number of days since a particular date; and outputting, by an output module, information indicating that the plane date is yet to be determined for the process corresponding to the model due date extracted at the extracting.

According to still another embodiment, there is provided a computer program product that causes a computer to implement the above method.

### BRIEF DESCRIPTION OF THE SEVERAL VIEWS OF THE DRAWINGS

A general architecture that implements the various features of the invention will now be described with reference to the drawings. The drawings and the associated descriptions are provided to illustrate embodiments of the invention and not to limit the scope of the invention.

FIG. 1 is an exemplary block diagram of a configuration of a project management system according to an embodiment;
FIG. 2 is an exemplary schematic diagram of a situation in which plane dates are registered for all processes in a project in the embodiment;
FIG. 3 is an exemplary schematic diagram of actual registrations for the processes in the project in the embodiment;
FIG. 4 is an exemplary block diagram of configurations of a management server and each client in the embodiment;
FIG. 5 is an exemplary schematic diagram of an association between tables stored in a storage module in the embodiment;
FIG. 6 is an exemplary schematic diagram of a structure of a table managed by a project information managing module in the embodiment;
FIG. 7 is an exemplary schematic diagram of a structure of a table managed by a process definition managing module in the embodiment;
FIG. 8 is an exemplary schematic diagram of a structure of a table managed by a schedule information managing module in the embodiment;
FIG. 9 is an exemplary schematic diagram of a structure of a table managed by a model case definition managing module in the embodiment;
FIG. 10 is an exemplary schematic diagram of a structure of a table managed by a follow-up condition definition managing module in the embodiment;
FIG. 11 is an exemplary schematic diagram of a display window to create a project generated by a project creating module in the embodiment;
FIG. 12 is an exemplary schematic diagram of a display window to edit a schedule generated by a schedule registering and edi ting module in the embodiment;
FIG. 13 is an exemplary schematic diagram of a display window listing schedules generated by a schedule displaying module in the embodiment;
FIG. 14 is an exemplary schematic diagram of a follow-up e-mail arranged by a notification transmitting module based on information obtained by an obtaining module in the embodiment;
FIG. 15 is an exemplary sequence diagram of a project-related setting process performed between a first client and the management server in the embodiment;
FIG. 16 is an exemplary flowchart of a follow-up e-mail transmitting process performed by a follow-up controller in the management server in the embodiment; and
FIG. 17 is an exemplary block diagram of a hardware configuration of the management server in the embodiment.

### DETAILED DESCRIPTION

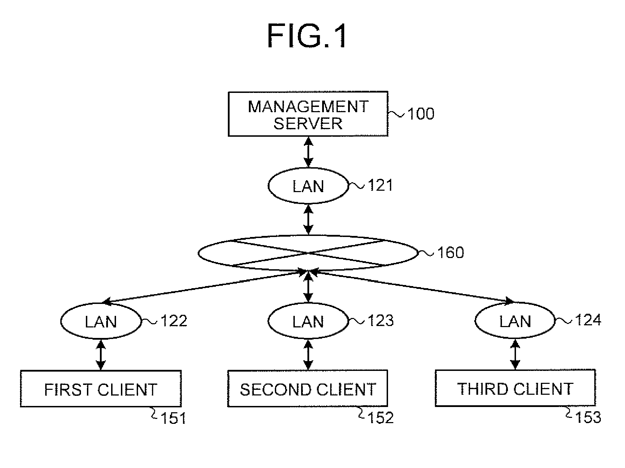

FIG. 1 is a block diagram of a configuration of a project management system according to an embodiment. As illustrated in FIG. 1, the project management system comprises a management server 100, a first client 151, a second client 152, and a third client 153 all of which are deployed across a public communication circuit 160 via respective local area networks (LAN) 121 to 124.

The management server 100 manages various types of information related to a project. For example, a user can refer to, register, or change the various types of information related to the project by accessing the management server 100 via the first client 151 to the third client 153.

The management server 100 manages information related to a project such as processes in the project, scheduled due dates by which such processes are to be completed (hereinafter, referred to as "plane dates"), and actual dates such processes are completed (hereinafter, also referred to as "actual dates") . While the embodiment is described as being applied to the processes in a project are explained to be working processes in which users work on their tasks or development processes, it is not so limited, and may be applied to various processes.

The project management system is not limited to the configuration illustrated in FIG. 1, and may comprise the management server 100 and various types of clients connected within a single LAN. Furthermore, the number of clients that can access the management server 100 is not limited as well.

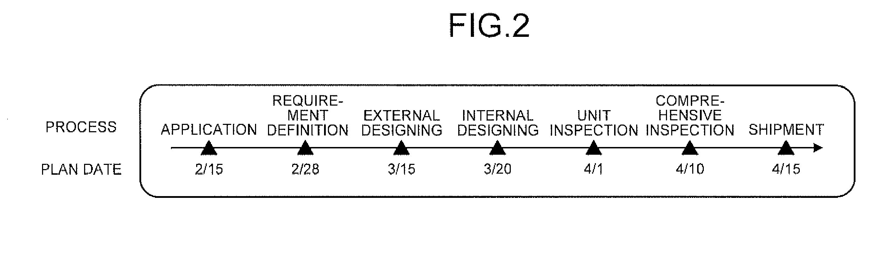

FIG. 2 illustrates an example of a situation in which plane dates are registered for all processes in a project. If plane dates are registered for all processes of a project in the manner illustrated in the example of FIG. 2, the management server 100 can, for example, transmit a follow-up e-mail notifying the user of the plane date on the date a predetermined number of days before the plane date, or transmit a follow-up e-mail notifying the user that the plane date has passed, using the plane date of each of the processes as a reference.

However, at the time the project is at first created, because the amount of work required for each of the processes differs depending on a project, it is quite difficult for the user to register the plane dates for all of the processes. Therefore, the plane dates of processes are often set as "yet to be determined" at the time the project is created. In such a situation, although the user can recognize that the due date of such a process is "yet to be determined" by referring to the schedule managed by a conventional management server, the user cannot identify by when the user must set a plane date for the process having the plane date "yet to be determined". In such a situation, the user might delay starting the task for the process having the plane date "yet to be determined", and the progress of the entire project might be delayed.

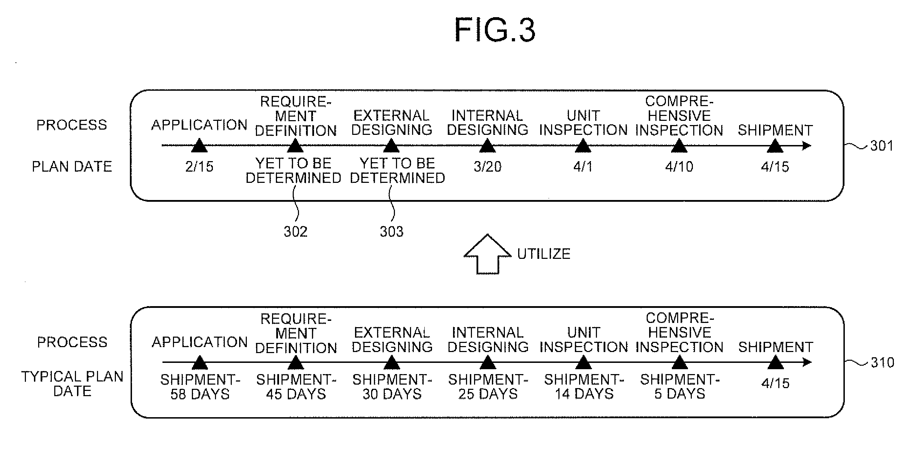

FIG. 3 illustrates an example of actual registrations for the processes in the project. In a due date list 301 of the due dates for the processes of the project illustrated in FIG. 3, the plane date 302 for the task "requirement definition" and the plane date 303 for the task "external designing" are set as "yet to be determined". In such a situation, the conventional project management system cannot transmit, for example, a follow-up e-mail for the tasks "requirement definition" and "external designing" based on the plane dates.

In response to this issue, the management server 100 according to the embodiment transmits, for example, a follow-up e-mail for a process having the plane date "yet to be determined" based on a due date determined according to a model case of such a process stored in a model due date list 310 of a development process. In this embodiment, the process requiring the typical amount of process time is established as a model case for each of the processes. In this embodiment, a follow-up is made using the due date calculated from a model case. In the example of the model due date list 310 illustrated in FIG. 3, differences between the due date of the process "shipment" and the due dates of the model case of these processes is indicated, using the due date of the process "shipment" as a reference. However, the process used as a reference is not limited to the "shipment" process, and may be any other process, provided that the due date for that process is set when the project is at first created. In other words, the due date of the model case of each of the processes can be calculated by subtracting the typical amount of process time required from the plane date set when the project is at first created.

In other words, at the time a project is launched, the users often have a hard time determining a plane date for each of the processes because the amount of work required and the difficulty of the work differ depending on the project. However, the typical amount of process time required for each of the processes can be calculated based on past projects, for example. Therefore, when the plane date is set as "yet to be determined" for a process, the management server 100 according to the embodiment uses the due date of a model case of the process calculated based on the typical amount of process time required. In this manner, even if "yet to be determined" is set as the plane date for a process, a follow-up e-mail can be transmitted, for example. A configuration for realizing transmissions of the follow-up e-mail will now be explained.

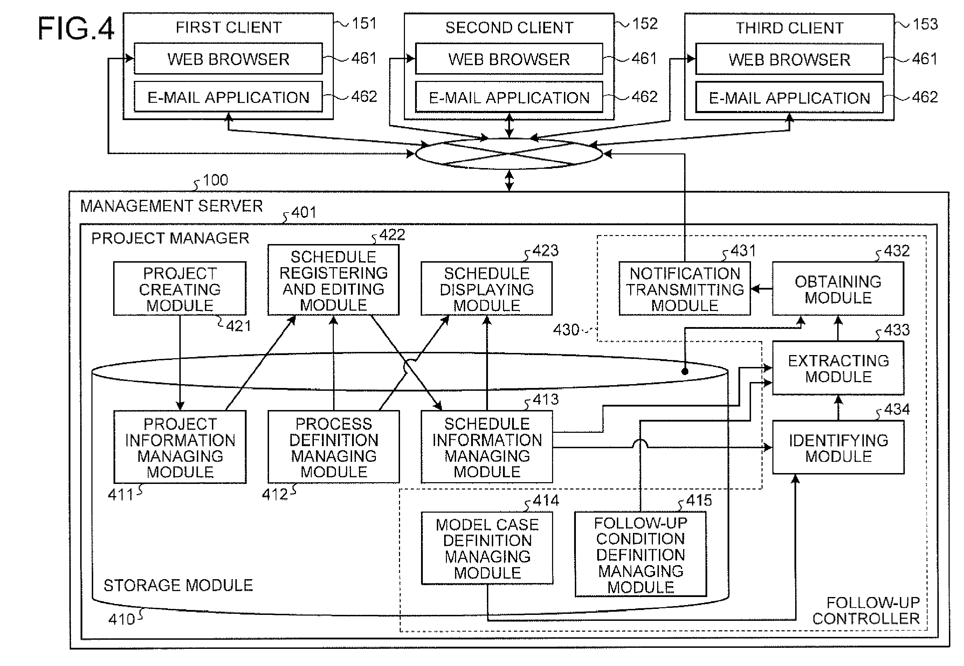

FIG. 4 is a block diagram of the configurations of the management server 100 and the clients 151 to 153. As illustrated in FIG. 4, each of the first client 151 to the third client 153 comprises a web browser 461 and an e-mail application 462.

The first client 151 to the third client 153 transmit and receive information to and from the management server 100 via the respective web browsers 461. Each of the first client 151 to the third client 153 then displays received information on a display window of the web browser 461. In this manner, the first client 151 to the third client 153 can cause the respective web browsers 461 to display the schedule of each process in a project managed by the management server 100.

The first client 151 to the third client 153 can cause the management server 100 to create a project or to edit the schedule (e.g., plane dates) of each process of the project via the respective web browsers 461.

The first client 151 to the third client 153 receive various follow-ups via the respective e-mail applications 462 based on the plane dates of each of the processes, for example.

The management server 100 comprises a proj ect manager 401, and manages various types of information related to a project. The management server 100 also comprises a communication interface (not illustrated), and transmits and receives information to and from the first client 151 to the third client 153.

The project manager 401 comprises a storage module 410, a project creating module 421, a schedule registering and editing module 422, a schedule displaying module 423, a notification transmitting module 431, an obtaining module 432, an extracting module 433, and an identifying module 434.

The storage module 410 stores therein a project information managing module 411, a process definition managing module 412, a schedule information managing module 413, a model case definition managing module 414, and a follow-up condition definition managing module 415.

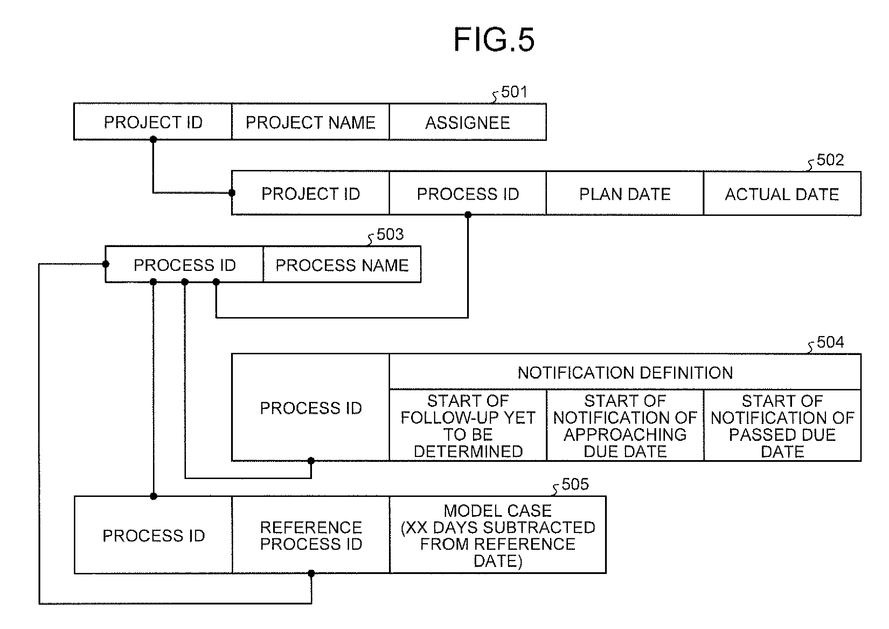

Each of the project information managing module 411, the process definition managing module 412, the schedule information managing module 413, the model case definition managing module 414, and the follow-up condition definition managing module 415 has a table. FIG. 5 illustrates an association between the tables stored in the storage module 410. In the example of FIG. 5, the project information managing module 411 manages a table 501, the schedule information managing module 413 manages a table 502, the process definition managing module 412 manages a table 503, the follow-up condition definition managing module 415 manages a table 504, and the model case definition managing module 414 manages a table 505. As illustrated in FIG. 5, these tables are associated by means of project identifications (IDs) and process IDs. In this manner, various operations can be performed for a project or processes in the project.

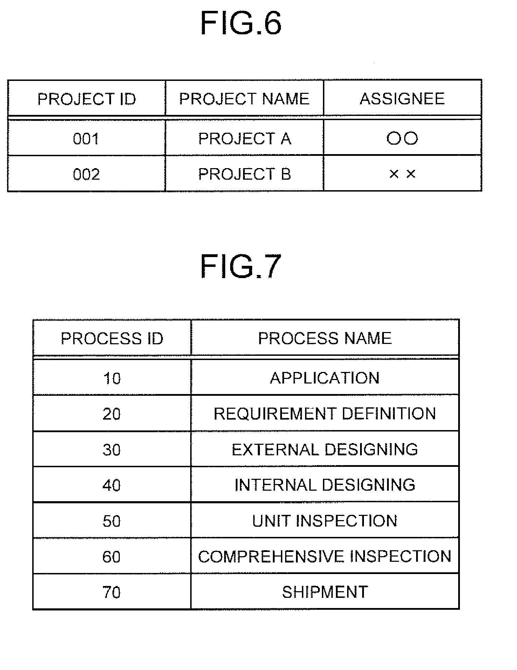

The project information managing module 411 is a database area storing therein input data received from the project creating module 421. FIG. 6 illustrates an example of a structure of the table managed by the project information managing module 411. As illustrated in FIG. 6, the table managed by the project information managing module 411 stores therein project IDs, project names, and assignees in an associated manner. A project ID is a unique ID assigned to a project. A project name is the name of the project. An assignee is a user who is responsible for the project.

The process definition managing module 412 is a database area storing therein the names of processes to be registered or to be edited and presented to the schedule registering and editing module 422. FIG. 7 illustrates an example of a structure of the table managed by the process definition managing module 412. As illustrated in FIG. 7, the table managed by the process definition managing module 412 stores therein process IDs and process names in an associated manner. A process ID is an identification of a process in a project. A process name is the name of the process.

In this manner, the process definition managing module 412 manages information of each of the processes in a project. The information of each of the processes managed by the process definition managing module 412 is shared among various projects. In other words, in the example illustrated in FIG. 7, each project is composed of processes "application", "requirement definition", "external designing", "internal designing", "unit inspection", "comprehensive inspection", and "shipment".

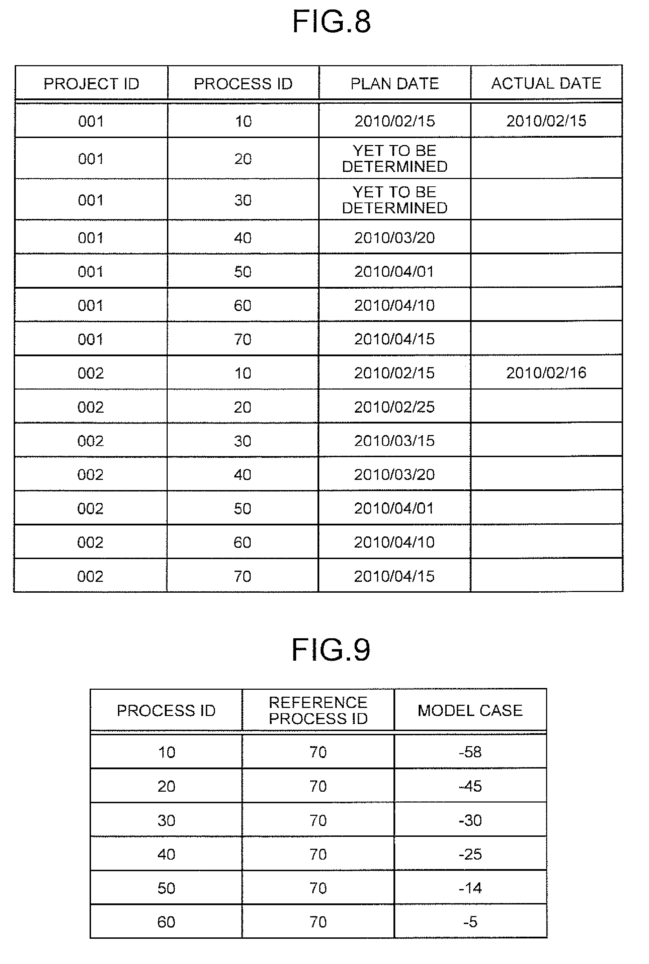

The schedule information managing module 413 is a database area storing therein input data received from the schedule registering and editing module 422. FIG. 8 illustrates an example of a structure of the table managed by the schedule information managing module 413. As illustrated in FIG. 8, the table managed by the schedule information managing module 413 stores therein the project IDs, the process IDs, the plane dates, and the actual dates in an associated manner. A combination of a project ID and a process ID identifies a process in a project.

A plane date is the plane date by which the process is to be completed. The plane date is set as "yet to be determined" when the plane date is not yet determined. The actual date is the date on which the process is actually completed. The actual date is kept blank until the process is completed.

The model case definition managing module 414 is a database area storing therein a definition of a typical schedule of each of the processes so that a follow-up can be made even when the plane date is not registered. Amongst the data stored in the schedule information managing module 413, the model case definition managing module 414 stores therein, as a definition, differences between the due date of a reference process whose plane date is set without fail and the due dates of the other processes under the assumption that the typical amount of process time is required in completing the processes (in other words, the number of days before or after completion of the reference process). The due dates of the model case according to the embodiment are determined based on the past experiences of the amount of time required for the processes. However, such a due date may be determined based on other information such as the estimated amount of time required.

FIG. 9 illustrates an example of a structure of the table managed by the model case definition managing module 414. As illustrated in FIG. 9, the table managed by the model case definition managing module 414 stores therein process IDs, reference process IDs, and model cases in an associated manner. A reference process ID identifies a process whose plane date is set without fail and used as a reference upon identifying the due date of the model case of another process. In the model case, a difference between the plane date of the reference process and the due date of the model case of such a process (in other words, the due date assuming that the typical amount of process time is required) is set.

In the example of FIG. 9, because the reference process ID is set to "70", the "shipment" process is used as a reference. By performing a calculation using the difference indicated in the model case and the plane date of the "shipment", the due date can be calculated for the model case of each of the processes.

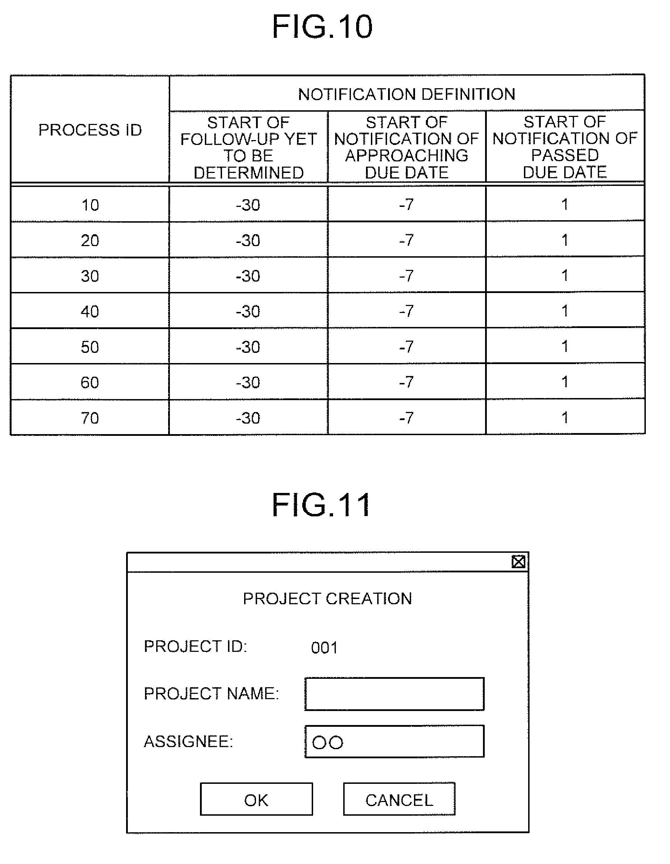

The follow-up condition definition managing module 415 is a database area storing therein definitions of dates for starting transmitting a follow-up e-mail. FIG. 10 illustrates an example of a structure of the table managed by the follow-up condition definition managing module 415. As illustrated in FIG. 10, the follow-up condition definition managing module 415 stores therein process IDs and notification definitions in an associated manner. A notification definition includes "start of follow-up yet to be determined", "notification of approaching due date", and "notification of passed due date". In the start of follow-up yet to be determined, the notification of approaching due date, and the notification of passed due date, the number of days is set to allow a follow-up e-mail to be transmitted.

In other words, the follow-up condition definition managing module 415 defines from when the follow-up e-mail is to be transmitted for a process having the plane date "yet to be determined", or to notify that the plane date (or the due date of a model case) arrives soon or that the plane date (or the due date of a model case) has passed. In other words, the notification transmitting module 431 is caused to transmit a follow-up e-mail when the current date falls within the number of days specified in the "start of follow-up yet to be determined", the "notification of approaching due date", and "notification of passed due date", using the plane dates of processes or the due dates of the model case of the processes as a reference.

For example, if the process ID is set to "10", the notification transmitting module 431 is caused to transmit a follow-up e-mail indicating that the plane date is not yet determined for the process when the current date falls within "30" days from the due date of the model case of the process.

Referring back to FIG. 4, the project creating module 421 creates a project. The project creating module 421 generates a display window for allowing a user to enter project information and outputs the display window to each of the clients 151 to 153. FIG. 11 illustrates an example of the display window for allowing a user to create a project, generated by the project creating module 421. The display window illustrated in FIG. 11 displays a preset project ID, and receives inputs of a project name and an assignee.

The project creating module 421 registers the project name and the assignee entered via the display window on each of the clients 151 to 153, and the project ID in the project information managing module 411 in an associated manner.

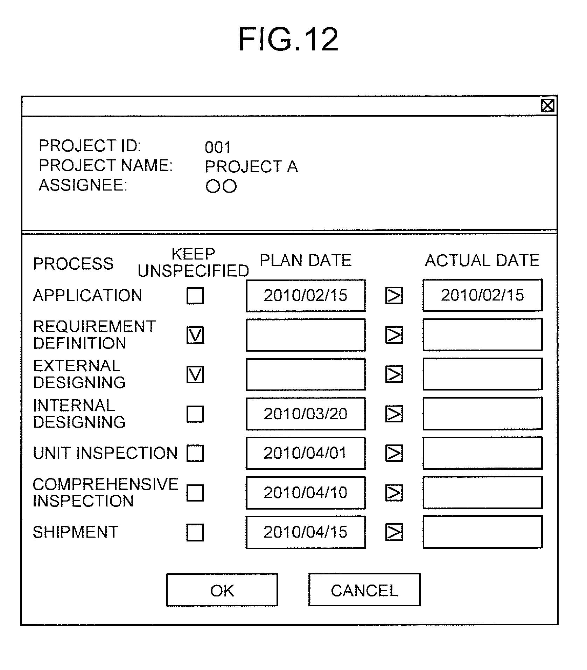

The schedule registering and editing module 422 registers and edits the schedule (the plane date and the actual date) of each of the processes in a project. The schedule registering and editing module 422 generates a display window to allow a user to edit the schedule of each of the processes in a project, and outputs the display window to each of the clients 151 to 153. FIG. 12 illustrates an example of the display window for allowing a user to edit a schedule, generated by the schedule registering and editing module 422. The window illustrated in FIG. 12 displays a "keep unspecified" checkbox, a plane date textbox, and an actual date textbox for each of the processes managed by the process definition managing module 412. The plane dates are usually not permitted to be kept blank. Only if the "keep unspecified" checkbox is checked, the plane date can be kept blank.

The schedule registering and editing module 422 registers the plane date and the actual date entered via the display window illustrated in FIG. 12 on each of the clients 151 to 153 in the schedule information managing module 413 in an associated manner. If the "keep unspecified" checkbox is checked, the schedule registering and editing module 422 registers "yet to be determined" for the plane date.

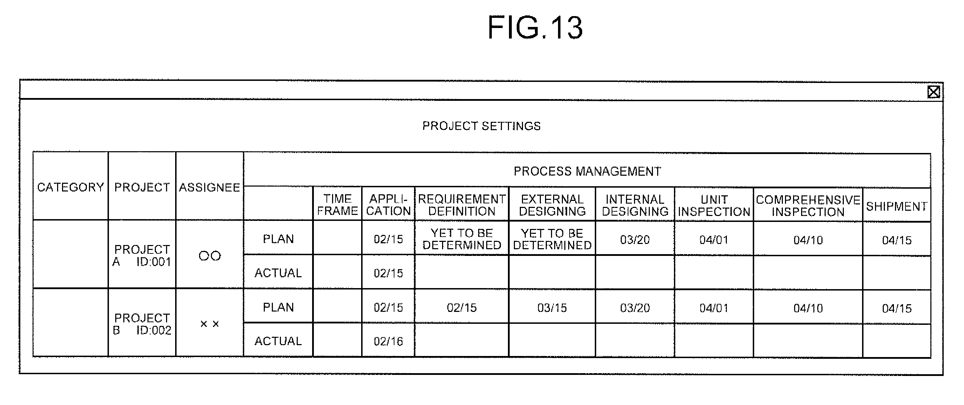

The schedule displaying module 423 reads the information on the entries stored in the schedule information managing module 413, generates a display window relating to the schedule of each of the processes in each project, and outputs the display window to each of the clients 151 to 153. FIG. 13 illustrates an example of the display window listing the schedules, generated by the schedule displaying module 423. The display window illustrated in FIG. 13 includes a list of the plane date and the actual date of each of the processes in each of these projects. This display window is presented to each of the clients 151 to 153, so that the users participating in the respective projects can recognize the progress of the projects.

The identifying module 434 determines the due date of a model case of a process having the plane date set as "yet to be determined" based on the schedule information managing module 413 and the model case definition managing module 414. In this embodiment, the identifying module 434 refers to the schedule information managing module 413 and the model case definition managing module 414 to obtain a process having a plane date set as "yet to be determined", the model case of such a process, the reference process (e.g., "shipment"), and the plane date of the reference process (e.g., "4/15"). The identifying module 434 then identifies the due date of the model case of the process having the plane date set as "yet to be determined" based on the result of a calculation based on the plane date of the reference process (e.g., "4/15") and the model case of such a process. The due date of the model case of the process (hereinafter, also referred to as "model due date") is not a plane date of such a process, but is used as a reference date upon following up the process. In other words, the management server 100 according to the embodiment can follow up a process having the plane date "yet to be determined" appropriately.

The extracting module 433 extracts the model due dates that fall within a predetermined number of days from the current date from those stored in the schedule information managing module 413. The extracting module 433 according to the embodiment extracts a model due date from those stored in the schedule information managing module 413 under the condition that the current date falls within the number of days defined in the follow-up condition definition managing module 415 (the start of follow-up yet to be determined, the notification of approaching due date, and notification of passed due date associated thereto) .

The extracting module 433 extracts a plane date from the plane dates under the condition that the current date falls within the number of days defined in the follow-up condition definition managing module 415 (the notification of approaching due date and the notification of passed due date associated thereto) . The date used in the extraction is not limited to the current date, and may be any date.

The obtaining module 432 obtains information related to the process corresponding to the extracted plane date and information related to the process corresponding to the extracted model due date. For example, the obtaining module 432 obtains the project name and the assignee of the project having such processes from the project information managing module 411. The obtaining module 432 also obtains the process name from the process definition managing module 412. The obtaining module 432 also obtains the difference between the plane date or the model due date and the current date.

The notification transmitting module 431 creates a follow-up e-mail and determines the receiver of the follow-up e-mail based on the information obtained by the obtaining module 432, and transmits the created follow-up e-mail to the determined receiver.

The follow-up e-mail to be transmitted includes information indicating that the plane date has not been determined yet for the process associated with the extracted model due date.

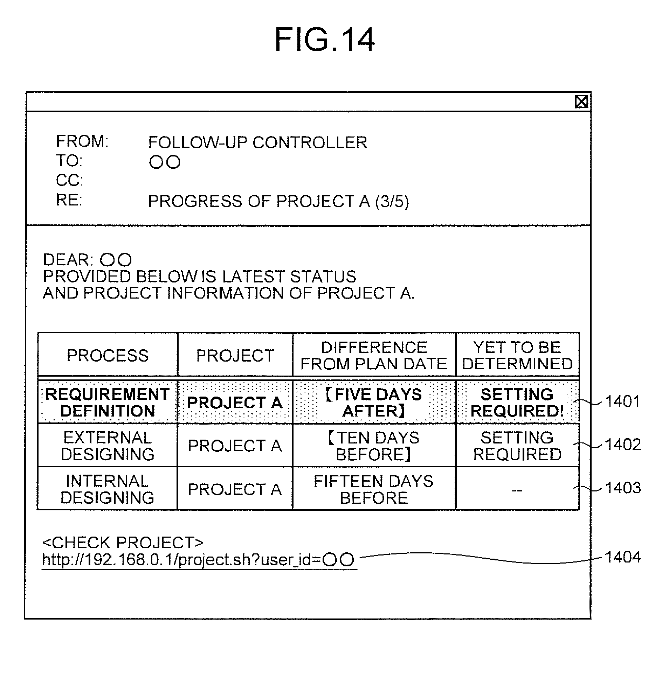

FIG. 14 illustrates an example of the follow-up e-mail arranged by the notification transmitting module 431 based on the information obtained by the obtaining module 432. The follow-up e-mail illustrated in FIG. 14 comprises information 1401 to 1403 on the processes matching the notification definitions managed by the follow-up condition definition managing module 415. The notification transmitting module 431 changes decorations applied to the processes in the follow-up e-mail depending on the current date falling within the number of days of any of the notification definitions, that is, the start of follow-up yet to be determined, the notification of approaching due date, or the notification of passed due date. For example, the information 1401 of the process matching the notification of passed due date is presented in bold letters in cells having a different color to emphasize to the users that the plane date or the model due date has passed.

In this manner, in the explanation of the embodiment, the management server 100 changes the color of the cells for a process with a passed due date. However, the decorative change is not limited thereto, and various decorations may be applied depending on the follow-up conditions.

Further, in the embodiment, a structure comprising the model case definition managing module 414, the follow-up condition definition managing module 415, the identifying module 434, the extracting module 433, the obtaining module 432, and the notification transmitting module 431 is referred to as a follow-up controller 430. The follow-up controller 430 performs a follow-up control for a project or each of the processes of the project. The follow-up controller 430 may be a structure stored in advance in the project manager 401, or may be added later on so that the follow-ups can be performed.

The follow-up controller 430 resides in the management server 100, and performs the process of transmitting a follow-up e-mail once a day.

The user can display the display window generated by the schedule registering and editing module 422 by clicking on a link 1404 in the follow-up e-mail on each of the clients 151 to 153. In this manner, the user can edit the plane date for the process having the plane date "yet to be determined".

The schedule registering and editing module 422 in the management server 100 receives the operation of editing the plane date not having been determined via the display window. The schedule registering and editing module 422 then registers the plane date in the schedule information managing module 413, with an association to the process.

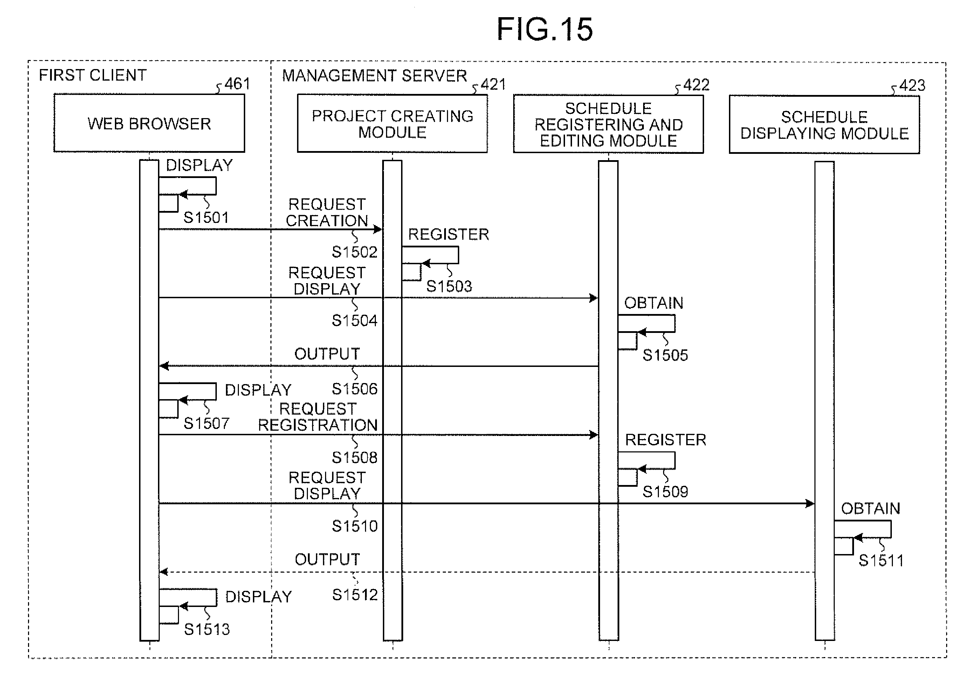

A project-related setting process performed between the first client 151 and the management server 100 according to the embodiment will now be explained. FIG. 15 is a sequence diagram of the process performed between the first client 151 and the management server 100 according to the embodiment.

First, the user starts the web browser 461 on the first client 151, and the web browser 461 displays the display window generated by the project creating module 421 of the management server 100 as illustrated in FIG. 11 (S1501) . The web browser 461 then transmits the information entered via the display window to the project creating module 421 to request creation of a project (S1502).

The project creating module 421 then registers the received information in the project information managing module 411 as a new project (S1503).

The web browser 461 then requests the schedule registering and editing module 422 to display the display window (51504) . In return, the schedule registering and editing module 422 obtains the name of items comprising the schedule from the process definition managing module 412 and the project ID and the like from the project information managing module 411, and generates the display window as illustrated in FIG. 12 (S1505).

The display window generated by the schedule registering and editing module 422 is output to the web browser 461 (S1506). The web browser 461 displays the received display window in return (S1507).

The web browser 461 then outputs the information entered via the display window to the schedule registering and editing module 422, together with a registration request (S1508). The schedule registering and editing module 422 registers the received information in the schedule information managing module 413 (S1509). In this manner, the plane date and the like of each of the processes in the project are registered.

Later in time, the web browser 461 issues a display request to the schedule displaying module 423 (S1510) . In response to the request, the schedule displaying module 423 obtains information related to each of the processes from the schedule information managing module 413 and the process definition managing module 412 and generates the display window as illustrated in FIG. 13 (S1511).

The schedule displaying module 423 then outputs the generated display window to the web browser 461 (S1512). In return, the web browser 461 displays the received display window (S1513) .

According to the process described above, the information related to the processes of each project can be registered and displayed.

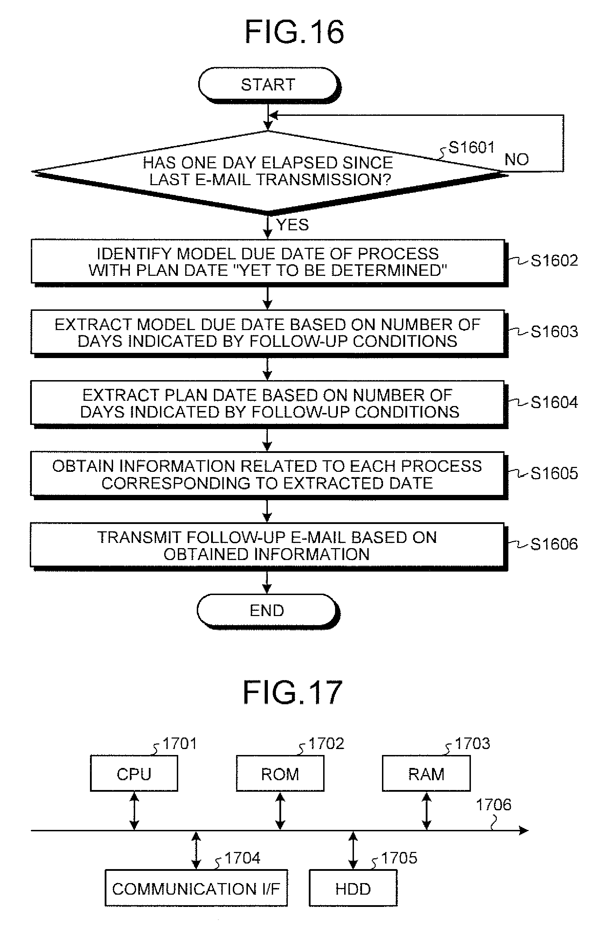

A follow-up e-mail transmitting process performed by the follow-up controller 430 in the management server 100 will now be explained. FIG. 16 is a flowchart of the process performed by the follow-up controller 430 in the management server 100 according to the embodiment.

First, the identifying module 434 determines if a day has passed since the last transmission of the follow-up e-mail (S1601). If the identifying module 434 determines that a day has not passed (No at S1601), the identifying module 434 performs the process at S1601 again.

If the identifying module 434 determines that a day has passed since the last transmission of the follow-up e-mail (Yes at S1601), the identifying module 434 identifies the model due dates for the processes with the plane date "yet to be determined" (S1602).

The extracting module 433 extracts the due dates of the model cases for which a follow-up e-mail is to be transmitted from the schedule information managing module 413 based on the number of days defined in the follow-up condition definition managing module 415 (the start of follow-up yet to be determined, the notification of approaching due date, and the notification of passed due date) (S1603).

The extracting module 433 then extracts the plane dates for which a follow-up e-mail is to be transmitted from the schedule information managing module 413 based on the number of days defined in the follow-up condition definition managing module 415 (the notification of approaching due date and the notification of passed due date) (S1604).

The obtaining module 432 then obtains information related to each of the processes corresponding to the dates extracted at S1603 and S1604 (the model due dates and the plane dates) (S1605).

The notification transmitting module 431 then creates a follow-up e-mail based on the information obtained by the obtaining module 432 and transmits the created follow-up e-mail (S1606).

According to the embodiment, to allow the management server 100 to transmit a follow-up e-mail for the processes having the plane dates "yet to be determined", the model case definition managing module 414 is used. In other words, because the conventional technology cannot determine whether the current date falls within the number of days defined as a follow-up condition based on the plane date unless the plane date is set, a follow-up cannot be made at appropriate timing. If the follow-up is to be made when the schedule due date is not set, processes such as follow-ups must be always kept performed, and the users might find it cumbersome and quit looking at the follow-ups.

On the other hand, when the plane date is set as "yet to be determined", the management server 100 according to the embodiment determines, upon transmitting a follow-up e-mail, whether the follow-up is to be made based on the due date of a model case managed by the model case definition managing module 414. Based on the due date of a model case, a follow-up can be made even when the plane date is not specified.

For example, in an actual product development, at the time the development project is launched for a new product model, the timing for the shipment is often known, while the due dates of the detailed intermediate processes are often uncertain. Under such a circumstance, the users will have to register the plane dates for the processes that have been uncertain. However, because those responsible for registering additional information are also responsible for other tasks, the registrations of the plane date may be delayed.

Because those involved in the development refer to and share information via a web site across a plurality of locations including remote locations in recent project management systems, a missed registration may cause a problem.

On the other hand, the management server 100 according to the embodiment makes a follow-up of each of the processes based on the due date of the model case of the development process even when the scheduled date is not registered. Therefore, even if the user forgets registering the plane date, the management server 100 can give a reminder to the user via a follow-up e-mail. In this manner, a missed information registration can be prevented, and smooth schedule management can be achieved.

While the management server 100 of the embodiment is described as calculating the model due date by subtracting the due dates of the other processes from the due date for the shipment, due date setting is not so limited. The model due date may be calculated by adding the due date of each of the processes to the due date of a predetermined process. For example, the application may be used as a reference, or the comprehensive inspection may be used as a reference.

In this manner, in the management server 100 according to the embodiment, even if the user forgets registering the plane date, such a schedule registration miss can be followed up based on the model case of the development process so as to reinforce the progress management of the development process.

FIG. 17 illustrates a hardware configuration of the management server 100 according to the embodiment. As illustrated in FIG. 17, the management server 100 comprises a central processing unit (CPU) 1701, a read-only memory (ROM) 1702, a random access memory (RAM) 1703, a communication interface (I/F) 1704, and a hard disk drive (HDD) 1705, which are connected one another by a bus 1706. That is, the management server 100 has a hardware configuration using a common computer.

A computer program (hereinafter, "project management program") may be executed on a computer to realize the same function as the management server 100 of the embodiment. The project management program may be provided as being stored in a computer-readable storage medium, such as a compact disk read-only memory (CD-ROM), a flexible disk (FD), a compact disk recordable (CD-R), and a digital versatile disk (DVD), as a file in an installable or an executable format.

The project management program may also be stored in a computer connected to a network such as the Internet so that it can be downloaded therefrom via the network. The project management program may also be provided or distributed over a network such as the Internet.

The project management program may also be provided as being stored in a ROM or the like in advance.

The project management program according to the embodiment has a modular structure comprising the modules explained above (the project creating module, the schedule registering and editing module, the schedule displaying module, the identifying module, the extracting module, the obtaining module, and the notification transmitting module) . In the actual hardware, by the CPU 1701 loading the project management program from the storage medium into the RAM 1703and executing it, the project creating module, the schedule registering and editing module, the schedule displaying module, the identifying module, the extracting module, the obtaining module, and the notification transmitting module are implemented on the main memory.

The various modules of the systems described herein can be implemented as software applications, hardware and/or software modules, or components on one or more computers, such as servers. While the various modules are illustrated separately, they may share some or all of the same underlying logic or code.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

## Claims

1. A process management device comprising:
a process storage module (413) configured to store processes included in a project, each associated with a plane date or yet-to-be-determined information indicating that the plane date is yet to be determined;
a model case storage module (414) configured to store a difference between a due date of a predetermined process and a due date of another process included in the project based on a typical amount of process time;
an identifying module (434) configured to identify a model due date for a process associated with the yet-to-be-determined information under an assumption that the process requires the typical amount of process time based on the process storage module (413) and the model case storage module (414);
an extracting module (433) configured to extract the model due date from a predetermined number of days since a particular date; and
an output module (431) configured to output information indicating that the plane date is yet to be determined for the process corresponding to the model due date extracted by the extracting module (433).

2. The process management device of Claim 1, further comprising:
an editing module (422) configured to receive editing of the plane date of the process corresponding to the information output by the output module (431); and
a registering module (422) configured to register the plane date received by the editing module (422) in the process storage module (413) in association with the process.

3. The process management device of Claim 1 or 2, wherein the information indicating that the plane date is yet to be determined and output by the output module (431) includes link information on a link to a display window that allows editing of a plane date yet to be determined.

4. A process management method applied to a process management device comprising a process storage module configured to store processes included in a project each associated with a plane date or yet-to-be-determined information indicating that the plane date is yet to be determined, and a model case storage module configured to store a difference between a due date of a predetermined process and a due date of another process included in the project based on a typical amount of process time, the process management method comprising:
identifying, by an identifying module, a model due date for a process associated with the yet-to-be-determined information under an assumption that the process requires the typical amount of process time based on the process storage module and the model case storage module;
extracting, by an extracting module, the model due date from a predetermined number of days since a particular date; and
outputting, by an output module, information indicating that the plane date is yet to be determined for the process corresponding to the model due date extracted at the extracting.

5. The process management method of Claim 4, further comprising:
receiving, by an editing module, editing of the plane date of the processes corresponding to the information output at the outputting; and
registering, by a registering module, the plane date received at the receiving in the process storage module in association with the process.

6. The process management method of Claim 4 or 5, wherein the information indicating that the plane date is yet to be determined and output at the outputting includes link information on a link to a display window that allows editing of a plane date yet to be determined.

7. A computer program product embodied on a computer-readable storage medium and comprising code that, when executed on a computer comprising a process storage module configured to store processes included in a project each associated with a plane date or yet-to-be-determined information indicating that the plane date is yet to be determined, and a model case storage module configured to store a difference between a due date of a predetermined process and a due date of another process included in the project based on a typical amount of process time, causes the computer to perform:
identifying, by an identifying module, a model due date for a process associated with the yet-to-be-determined information under an assumption that the process requires the typical amount of process time based on the process storage module and the model case storage module;
extracting, by an extracting module, the model due date from a predetermined number of days since a particular date; and
outputting, by an output module, information indicating that the plane date is yet to be determined for the process corresponding to the model due date extracted at the extracting.
